(19) **Europäisches Patentamt**
**European Patent Office**
**Office européen des brevets**

(11) **EP 2 524 127 B1**

(12) **EUROPÄISCHE PATENTSCHRIFT**

(45) Veröffentlichungstag und Bekanntmachung des Hinweises auf die Patenterteilung:
**03.12.2014 Patentblatt 2014/49**

(21) Anmeldenummer: **10790732.1**

(22) Anmeldetag: **04.12.2010**

(51) Int Cl.:
**F02B 41/04** (2006.01)     **F02B 75/04** (2006.01)

(86) Internationale Anmeldenummer:
**PCT/EP2010/007373**

(87) Internationale Veröffentlichungsnummer:
**WO 2011/085755 (21.07.2011 Gazette 2011/29)**

(54) **REIHEN-BRENNKRAFTMASCHINE MIT MEHRGELENKSKURBELTRIEB SOWIE EINER EINZIGEN AUSGLEICHSWELLE ZUR TILGUNG VON MASSENKRÄFTEN ZWEITER ORDNUNG**

INLINE INTERNAL COMBUSTION ENGINE WITH MULTIPLE LINK CRANK DRIVE HAVING A SINGLE BALANCER SHAFT TO COMPRENSATE SECOND ORDER MOMENTUM FORCES

MOTEUR EN LIGNE AVEC COMMANDE À MANIVELLE À ARTICULATION MULTIPLE AVEC UN SEUL ARBRE D'ÉQUILIBRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.01.2010 DE 102010004589**

(43) Veröffentlichungstag der Anmeldung:
**21.11.2012 Patentblatt 2012/47**

(73) Patentinhaber: **Audi AG**
**85045 Ingolstadt (DE)**

(72) Erfinder: **BRENDEL, Matthias**
**85049 Ingolstadt (DE)**

(56) Entgegenhaltungen:
**EP-A1- 1 811 199     EP-A1- 1 950 390**
**EP-A2- 1 659 276     WO-A1-2007/057149**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Brennkraftmaschine gemäß dem Oberbegriff des Anspruchs 1.

Brennkraftmaschinen dieser Art sind zum Beispiel aus der DE-A-102005054761, der DE-A-102005054760, der EP-A-1126144, der JP-A-2004124775 oder der WO-A-2007057149 sowie aus WO 2007/057149 A und EP 1 659 276 A bekannt und werden häufig als Brennkraftmaschinen mit variablem Verdichtungsverhältnis oder als Brennkraftmaschinen mit veränderlichem Kolbenhub (stroke variable engine) bezeichnet.

Diese Brennkraftmaschinen umfassen eine Exzenterwelle, die mit der Kurbelwelle über einen Mehrgelenkskurbeltrieb gekoppelt ist. Der Mehrgelenkskurbeltrieb umfasst eine der Anzahl der Zylinder entsprechende Anzahl von Koppelgliedern, die jeweils drehbar auf einem Hubzapfen der Kurbelwelle gelagert sind und zwei nach entgegengesetzten Seiten über die Kurbelwelle überstehende, an ihrem Ende jeweils mit einem Schwenkgelenk versehene Arme aufweisen. Eines der Schwenkgelenke dient zur Anlenkung eines Kolbenpleuels, der einen der Kolben der Brennkraftmaschine über das Koppelglied mit der Kurbelwelle verbindet, während das andere Schwenkgelenk zur Anlenkung eines sogenannten Anlenkpleuels dient, der mit seinem anderen Ende drehbar auf einem Hubzapfen der Exzenterwelle gelagert ist.

Ähnlich wie konventionelle Brennkraftmaschinen ohne eine über einen Mehrgelenkskurbeltrieb mit der Kurbelwelle gekoppelte Exzenterwelle entstehen auch bei Brennkraftmaschinen der eingangs genannten Art Massenkräfte erster und zweiter Ordnung, die durch oszillierende Massen hervorgerufen werden und sich mit dem Kurbelwinkel verändern. Zur Erzielung einer gewünschten großen Laufruhe und zur Geräuschminderung müssen diese Massenkräfte soweit wie möglich ausgeglichen werden. Während die Massenkräfte erster Ordnung durch Ausgleichgewichte auf der Kurbelwelle und die Kurbelwellenkröpfungsfolge ausgeglichen werden können, erfolgt der Ausgleich von Massenkräften zweiter Ordnung bei konventionellen Brennkraftmaschinen häufig mit Hilfe von zwei gegenläufig rotierenden Ausgleichswellen, die mit der doppelten Drehzahl der Kurbelwelle angetrieben werden.

Jedoch weisen Brennkraftmaschinen der eingangs genannten Art bereits an sich höhere Reibungsverluste als konventionelle Brennkraftmaschinen auf, so dass durch die zusätzlichen Reibungsverluste zweier Ausgleichswellen ein akzeptables Maß überschritten würde.

Um dieses Problem zu lösen, wird in der eingangs genannten JP-A-2004124775 bereits vorgeschlagen, den Massenausgleich durch günstige Schwerpunktlagen der Bauteile des Mehrgelenkskurbeltriebs zu verbessern, was jedoch im Hinblick auf die Massenkräfte zweiter Ordnung nicht von Vorteil ist, da durch die optimierten Schwerpunktlagen die Kurbeltriebsmassen meist noch größer werden.

Weiter wird in der eingangs genannten EP-A-1126144 beschrieben, wie bei einer 4-Zylinder-Brennkraftmaschine in Reihenbauweise mit einem Mehrgelenkskurbeltrieb durch eine Optimierung der Kinematik die Massenkräfte zweiter Ordnung unter einen definierten Grenzwert gebracht werden können, wobei sich jedoch kein Hinweis auf eine Verbesserung der Laufruhe durch Ausgleichswellen findet.

Auch mit anderen Maßnahmen, die in einem Teil der eingangs genannten Druckschriften beschrieben sind, wie in der DE-A-102005054761, der DE-A-102005054760 oder der WO-A-2007057149, können die Massenkräfte zweiter Ordnung nur sehr unvollständig ausgeglichen werden, so dass Reihen-Brennkraftmaschinen mit Mehrgelenkskurbeltrieb im Hinblick auf die Laufruhe herkömmlichen Reihen-Brennkraftmaschinen unterlegen sind.

Ausgehend hiervon liegt der Erfindung die Aufgabe zugrunde, eine Brennkraftmaschine der eingangs genannten Art dahingehend zu verbessern, dass sich die Massenkräfte zweiter Ordnung ohne eine erhebliche Vergrößerung der Reibungsverluste ausgleichen lassen.

Diese Aufgabe wird erfindungsgemäß dadurch gelöst, dass die Brennkraftmaschine mit einer einzigen, zur Tilgung von Massenkräften zweiter Ordnung dienenden Ausgleichswelle versehen wird.

Versuche haben gezeigt, dass es mit einer einzigen Ausgleichswelle möglich ist, die bei einer Brennkraftmaschine der eingangs genannten Art auftretenden Massenkräfte zweiter Ordnung vollständig auszugleichen. Dadurch, dass nur eine einzige Ausgleichswelle erforderlich ist, können dabei nicht nur die zusätzlichen Reibungsverluste sondern auch der zusätzlich benötigte Bauraum, das zusätzliche Gewicht und die zusätzlichen Kosten auf akzeptable Werte begrenzt werden.

Der Erfindung liegt der Gedanke zugrunde, dass das Niveau der Massenkräfte zweiter Ordnung bei einer Brennkraftmaschine der eingangs genannten Art mit einem Mehrgelenkskurbeltrieb einerseits an sich bereits erheblich niedriger ist als bei einer konventionellen Brennkraftmaschine mit gleichem Hub und gleicher oszillierender Masse, und sich andererseits durch eine geeignete Auslegung der Komponenten des Mehrgelenkskurbeltriebs, d.h. der Kurbelwelle, der Koppelglieder, der Kolbenpleuel, der Anlenkpleuel und der Exzenterwelle, sowie durch eine geeignete Kinematik bzw. Dimensionierung dieser Komponenten innerhalb von bestimmten Grenzen weiter verringern lässt.

Während bei konventionellen Brennkraftmaschinen die Massenkräfte zweiter Ordnung nur in Richtung der Zylinderachsen wirken, was bei Reihen-Brennkraftmaschinen deren Hochachse entspricht, weisen bei Reihen-Brennkraftmaschinen der eingangs genannten Art mit Mehrgelenkskurbeltrieb die Massenkräfte zweiter Ordnung nicht nur in Richtung der Hochachse sondern auch in Richtung einer dazu senkrechten Querachse der Brennkraftmaschine wirkende Kraftvektoren auf. Die jeweilige Resultierende dieser beiden Kraftvektoren besitzt eine Amplitude, die sich im Verlauf einer Umdrehung der Kurbelwelle verändert und sich in einer zur Drehachse der Kurbelwelle senkrechten Y,Z-Koordinatenebene der Brennkraftmaschine über eine Umdrehung der Kurbelwelle als eine geschlossene Kurve darstellen lässt. Diese Kurve kann je nach Anordnung und Dimensionierung der Komponenten des Mehrgelenkskurbeltriebs entweder eine langgestreckte schleifenartige Gestalt oder eine eher rundliche elliptische oder ovale bis annähernd kreisförmige Gestalt annehmen. Da im Falle einer exakt kreisförmigen Gestalt der Kurve mit Hilfe einer einzigen Ausgleichswelle eine vollständige Tilgung der Massenkräfte zweiter Ordnung möglich wäre, wird durch Optimierung der Auslegung der Komponenten des Mehrgelenkskurbeltriebs und der Dimensionierung bzw. Kinematik des Mehrgelenkskurbeltriebs eine Kurve mit einer Gestalt angestrebt, die einem Kreis möglichst nahe kommt bzw. möglichst wenig von der Kreisform abweicht, wobei die Kraftvektoren zudem möglichst klein sein sollten.

Um dies zu erreichen, wird die Auslegung und Dimensionierung der Komponenten des Mehrgelenkskurbeltriebs so gewählt, dass möglichst viele und vorzugsweise sämtliche der nachfolgend angegebenen Beziehungen erfüllt werden:

$$4,5 \times r\_KW < L_{P1P2} < 6 \times r\_KW \qquad (1)$$

$$1,5 \times r\_KW < L_{P2P3} < 3 \times r\_KW \qquad (2)$$

$$5,5 \times r\_KW < L_{P2P4} < 8 \times r\_KW \qquad (3)$$

$$3,5 \times r\_KW < L_{P3P4} < 5 \times r\_KW \qquad (4)$$

$$3 \times r\_KW < L_{P4P5} < 5 \times r\_KW \qquad (5)$$

$$130° < \alpha < 160° \qquad (6)$$

$$0,75 \times r\_KW < S < 2 \times r\_KW \qquad (7)$$

$$0,05 \times r\_KW < r\_EW < 0,9 \times r\_KW \qquad (8)$$

$$-3 \times r\_KW < y\_EW < -8 \times r\_KW \qquad (9)$$

$$-1 \times r\_KW < z\_EW < -3 \times r\_KW \qquad (10)$$

wobei in diesen Beziehungen:

- r_KW der Kurbelradius ist, das heißt der Abstand einer Längsmittelachse der Hubzapfen der Kurbelwelle von der Drehachse der Kurbelwelle, und
- für sämtliche Koppelglieder:

  - $L_{P1P2}$ der Abstand der Schwenkachse eines Schwenkgelenks zwischen einem Koppelglied und dem zugehörigen Kolbenpleuel von einer Schwenkachse eines Schwenkgelenks zwischen dem Kolbenpleuel und dem zugehörigen Kolben ist,
  - $L_{P2P3}$ der Abstand der Schwenkachse eines Schwenkgelenks zwischen einem der Kolbenpleuel und dem zugehörigen Koppelglied von der Längsmittelachse des mit dem Koppelglied bestückten Hubzapfens der Kurbelwelle ist,

- $L_{P2P4}$ der Abstand einer Schwenkachse eines Schwenkgelenks zwischen einem der Kolbenpleuel und dem zugehörigen Koppelglied von der Schwenkachse eines Schwenkgelenks zwischen dem Koppelglied und dem zugehörigen Anlenkpleuel ist,
- $L_{P3P4}$ der Abstand der Schwenkachse eines Schwenkgelenks zwischen einem der Anlenkpleuel und dem zugehörigen Koppelglied von der Längsmittelachse des mit dem Koppelglied bestückten Hubzapfens der Kurbelwelle ist,
- $L_{P4P5}$ der Abstand der Längsmittelachse eines Hubzapfens der Exzenterwelle von der Schwenkachse eines Schwenkgelenks zwischen dem auf dem Hubzapfen gelagerten Anlenkpleuel und dem zugehörigen Koppelglied ist,
- $\alpha$ der Winkel ist, der von zwei Geraden eingeschlossen wird, von denen die eine die Längsmittelachse eines Lagersitzes eines Hubzapfens in einem Koppelglied mit einer Schwenkachse eines Schwenkgelenks zwischen dem Koppelglied und dem zugehörigen Kolbenpleuel verbindet und von denen die andere die Längsmittelachse des Lagersitzes des Hubzapfens im Koppelglied mit einer Schwenkachse eines Schwenkgelenks zwischen dem auf dem Hubzapfen gelagerten Koppelglied und dem zugehörigen Anlenkpleuel verbindet,

- S ein als Schränkung bezeichneter horizontaler Abstand der Drehachse der Kurbelwelle von einer von den Zylinderachsen der Zylinder der Brennkraftmaschine aufgespannten Ebene EZ ist,
- r_EW der Abstand der Längsmittelachsen der Hubzapfen der Exzenterwelle von der Drehachse der Exzenterwelle ist,
- y_EW ein horizontaler Abstand der Drehachse der Exzenterwelle von der von den Zylinderachsen der Zylinder der Brennkraftmaschine aufgespannten Ebene EZ in Richtung einer Querachse der Brennkraftmaschine ist, und
- z_EW ein vertikaler Abstand der Drehachse der Exzenterwelle von der Drehachse der Kurbelwelle in Richtung einer Hochachse der Brennkraftmaschine ist.

Durch Versuche wurde gezeigt, dass es mit einer derartigen Auslegung und Dimensionierung der Komponenten des Mehrgelenkskurbeltriebs möglich ist, die Massenkräfte zweiter Ordnung nahezu vollständig mit nur einer Ausgleichswelle zu tilgen, die sich in zweiter Ordnung, das heißt mit der doppelten Drehzahl der Kurbelwelle dreht. Da die Versuche auch ergeben haben, dass verbleibende Massenkräfte zweiter Ordnung je nach Drehrichtung der Ausgleichswelle unterschiedlich hoch sein können, sieht eine weitere vorteilhafte Ausgestaltung der Erfindung vor, dass sich die Ausgleichswelle mit einer der Drehrichtung der Kurbelwelle entsprechenden Drehrichtung dreht, weil in diesem Fall unter den zuvor genannten Bedingungen die verbleibenden ungetilgten Massenkräfte zweiter Ordnung erheblich niedriger sind als bei einer umgekehrten Drehrichtung der Ausgleichswelle.
Im Falle einer Brennkraftmaschine mit einer zur Verlängerung des Expansionshubs von der Kurbelwelle angetriebenen Exzenterwelle, die sich mit einer zur Drehrichtung der Kurbelwelle entgegengesetzten Drehrichtung dreht, können die Massenkräfte zweiter Ordnung unter bestimmten Randbedingungen mit nur einer einzigen Ausgleichswelle sogar vollständig getilgt bzw. ausgeglichen werden.
Vorzugsweise werden die Exzenterwelle und die Ausgleichswelle von der Kurbelwelle über einen gemeinsamen Zahnrad- oder Umschlingungstrieb angetrieben, jedoch mit unterschiedlichem Untersetzungs- bzw. Übersetzungsverhältnis. Grundsätzlich ist es jedoch auch möglich, unterschiedliche Zahnrad- oder Umschlingungstriebe zu verwenden.
Im Folgenden wird die Erfindung anhand eines in der Zeichnung dargestellten Ausführungsbeispiels näher erläutert. Es zeigen

Fig. 1 eine perspektivische Ansicht von zusammenwirkenden Teilen einer Brennkraftmaschine mit einer durch einen Mehrgelenkskurbeltrieb mit der Kurbelwelle gekoppelten Exzenterwelle;

Fig. 2 eine andere perspektivische Ansicht eines Ausschnitts aus Fig. 1;

Fig. 3 eine teilweise geschnittene Seitenansicht des Ausschnitts aus Fig. 2;

Fig. 4 eine teilweise geschnittene Stirnseitenansicht des Ausschnitts aus Fig. 2;

Fig. 5 eine Fig. 4 entsprechende schematische Darstellung der verschiedenen Dreh- und Schwenkgelenke des Mehrgelenkskurbeltriebs sowie verschiedene Auslegungs- bzw. Dimensionierungsparameter;

Fig. 6 eine Kurvendarstellung des Amplitudenverlaufs von Massenkräften zweiter Ordnung in einer zur Drehachse der Kurbelwelle senkrechten Ebene über eine Umdrehung der Kurbelwelle;

Fig. 7 ein Balkendiagramm mit verschiedenen Balkenpaaren, die freie Massenkräfte zweiter Ordnung in Richtung einer Hoch- und einer Querachse der Brennkraftmaschine für verschiedene Auslegungen der Brennkraftmaschine zeigen.

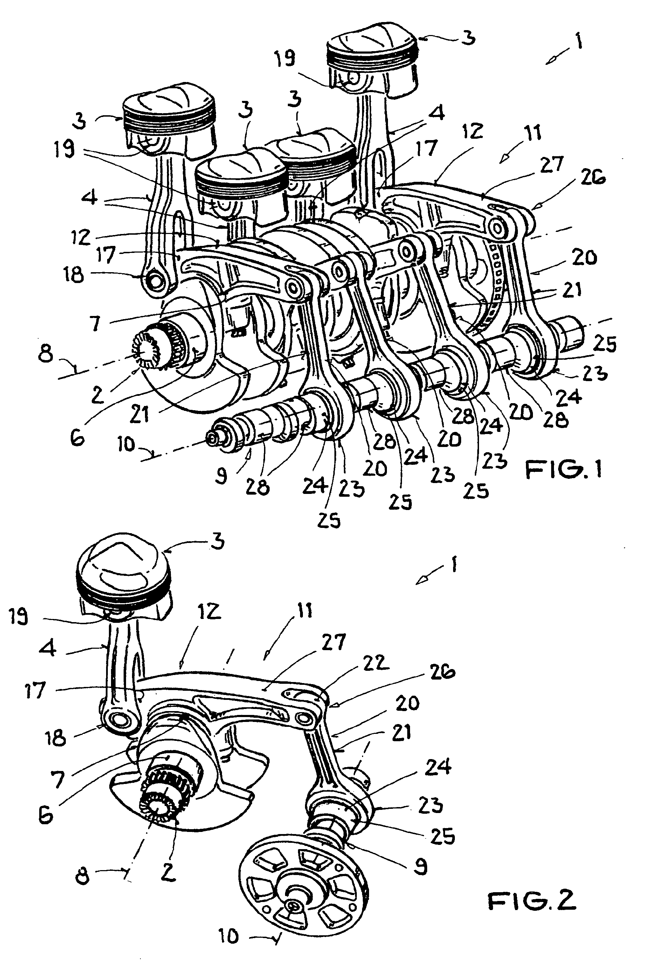

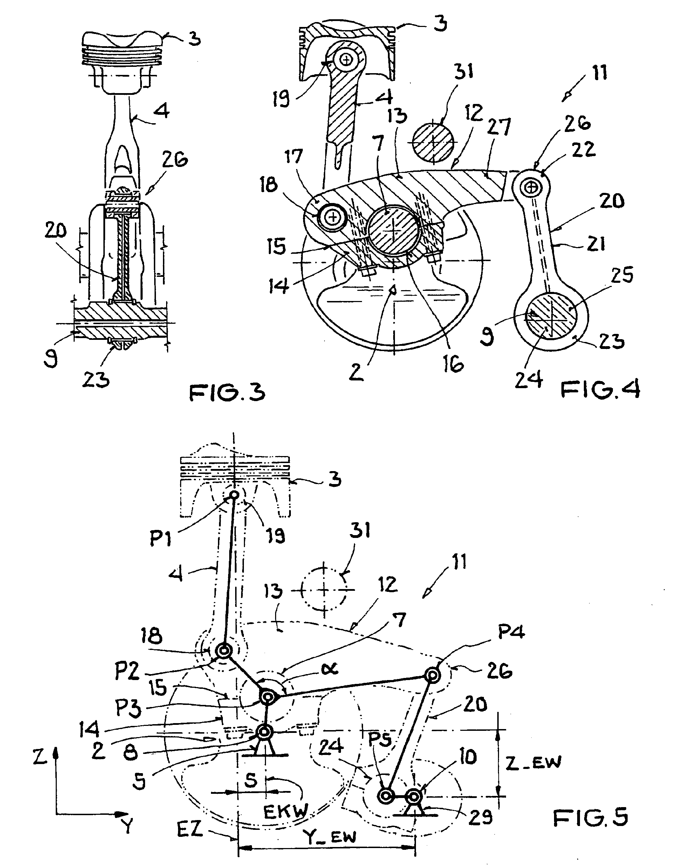

Wie am besten in Fig. 1 dargestellt, umfasst die in der Zeichnung nur teilweise dargestellte Viertakt-4-Zylinder-Brennkraftmaschine 1 in Reihenanordnung eine Kurbelwelle 2 und vier Kolben 3, von denen jeder in einem der vier Zylinder (nicht dargestellt) der Brennkraftmaschine 1 auf und ab beweglich und durch ein Kolbenpleuel 4 mit der Kurbelwelle 2 verbunden ist. Die Kurbelwelle 2 ist in Wellenlagern 5 (Fig. 5) eines Zylinderkurbelgehäuses (nicht dargestellt) der Brennkraftmaschine 1 drehbar gelagert und weist fünf zur Lagerung dienende zentrische Wellenzapfen 6 sowie vier Hubzapfen 7 (in Fig. 1 und 2 jeweils nur einer sichtbar) auf, deren Längsmittelachsen in unterschiedlichen Winkelausrichtungen parallel zur Drehachse 8 der Kurbelwelle 2 versetzt sind.

Die Brennkraftmaschine 1 umfasst weiter eine Exzenterwelle 9, die eine zur Drehachse 8 der Kurbelwelle 2 parallele Drehachse-10 aufweist, neben der Kurbelwelle 2 sowie etwas unterhalb von dieser im Zylinderkurbelgehäuse drehbar gelagert und über einen Mehrgelenkskurbeltrieb 11 mit der Kurbelwelle 2 gekoppelt ist.

Neben der Kurbelwelle 2 und der Exzenterwelle 8 umfasst der Mehrgelenkskurbeltrieb 11 insgesamt vier Koppelglieder 12, die jeweils auf einem der Hubzapfen 7 der Kurbelwelle 2 drehbar gelagert sind. Wie am besten in Fig. 2 und 3 dargestellt, besteht jedes Koppelglied 12 aus einem Oberteil 13 und einem Unterteil 14, die entlang einer Trennebene 15 gegeneinander anliegen und jeweils angrenzend an die Trennebene 15 mit einer halbzylindrischen Ausnehmung zur Aufnahme des Hubzapfens 7 sowie von zwei den Hubzapfen 7 umgebenden Lagerschalen eines zwischen dem Hubzapfen 7 und dem Koppelglied 12 angeordneten Gleitlagers 16 versehen sind. Das Oberteil 13 und das Unterteil 14 jedes Koppelglieds 9 werden von zwei Schrauben zusammengehalten. Jedes Koppelglied 12 weist einen kürzeren Hubarm 17 auf, der über ein Schwenkgelenk 18 schwenkbar mit dem unteren Ende von einem der Kolbenpleuel 4 verbunden ist, dessen oberes Ende über ein weiteres Schwenkgelenk 19 am zugehörigen Kolben 3 angelenkt ist.

Der Mehrgelenkskurbeltrieb 11 umfasst weiter eine der Anzahl der Kolbenpleuel 4 und der Koppelglieder 12 entsprechende Anzahl von Anlenkpleueln 20, die ungefähr parallel zu den Kolbenpleueln 4 ausgerichtet und in axialer Richtung der Kurbelwelle 2 und der Exzenterwelle 9 jeweils etwa in derselben Ebene wie der zugehörige Kolbenpleuel 4, jedoch auf der entgegengesetzten Seite der Kurbelwelle 2 angeordnet sind. Wie am besten in den Figuren 2 und 4 dargestellt, umfasst jeder Anlenkpleuel 20 eine Pleuelstange 21 und zwei an entgegengesetzten Enden der Pleuelstange 21 angeordnete Pleuelaugen 22, 23 mit unterschiedlichen Innendurchmessern. Das größere Pleuelauge 23 jedes Anlenkpleuels 20 am unteren Ende der Pleuelstange 21 umgibt einen in Bezug zur Drehachse 10 der Exzenterwelle 9 exzentrischen Hubzapfen 24 der Exzenterwelle 9, auf dem der Anlenkpleuel 21 mittels eines Drehlagers 25 drehbar gelagert ist. Das kleinere Pleuelauge 22 am oberen Ende der Pleuelstange 21 jedes Anlenkpleuels 20 bildet einen Teil eines Schwenkgelenks 26 zwischen dem Anlenkpleuel 20 und einem längeren Koppelarm 27 des benachbarten Koppelgliedes 8, der auf der zum Hubarm 17 entgegengesetzten Seite der Kurbelwelle 2 über diese übersteht.

Wie am besten in Fig. 1 und 2 dargestellt, weist die Exzenterwelle 9 zwischen benachbarten exzentrischen Hubzapfen 24 sowie an ihren Stirnenden zur Lagerung der Exzenterwelle 9 in Wellenlagern 29 (Fig. 5) dienende, zur Drehachse 10 koaxiale Wellenabschnitte 28 auf.

Abgesehen von einer variablen Verdichtung kann durch die zuvor beschriebene Anordnung auch die Neigung der Kolbenpleuel 4 in Bezug zur Zylinderachse der zugehörigen Zylinder während der Drehung der Kurbelwelle 2 verringert werden, was zu einer Verringerung der Kolbenseitenkräfte und damit der Reibkräfte zwischen den Kolben 2 und Zylinderwänden der Zylinder führt.

Wie bei anderen Brennkraftmaschinen treten jedoch auch bei der Brennkraftmaschine 1 durch die oszillierenden Massen der Kolben 3, der Kolbenpleuel 4, der Koppelglieder 9 und der Anlenkpleuel 20 freie Massenkräfte auf, die soweit wie möglich ausgeglichen werden sollten, um die Laufruhe und die Akustik der Brennkraftmaschine 1 zu verbessern. Diese freien Massenkräfte umfassen in erster Linie Massenkräfte erster Ordnung und Massenkräfte zweiter Ordnung, von denen die ersteren durch Ausgleichsgewichte 30 auf der Kurbelwelle 2 und deren Kröpfungsfolge ausgeglichen werden, während zur Tilgung der letzteren eine einzige, mit Ausgleichsgewichten (nicht dargestellt) versehene Ausgleichswelle 31 dient. Die Ausgleichswelle 31 ist oberhalb von der Kurbelwelle 2 im Zylinderkurbelgehäuse der Brennkraftmaschine 1 drehbar gelagert und wird von der Kurbelwelle 2 über ein Übersetzungsgetriebe (nicht dargestellt) mit der doppelten Drehzahl der Kurbelwelle 2 und mit einer der Drehrichtung der Kurbelwelle 2 entsprechenden Drehrichtung angetrieben.

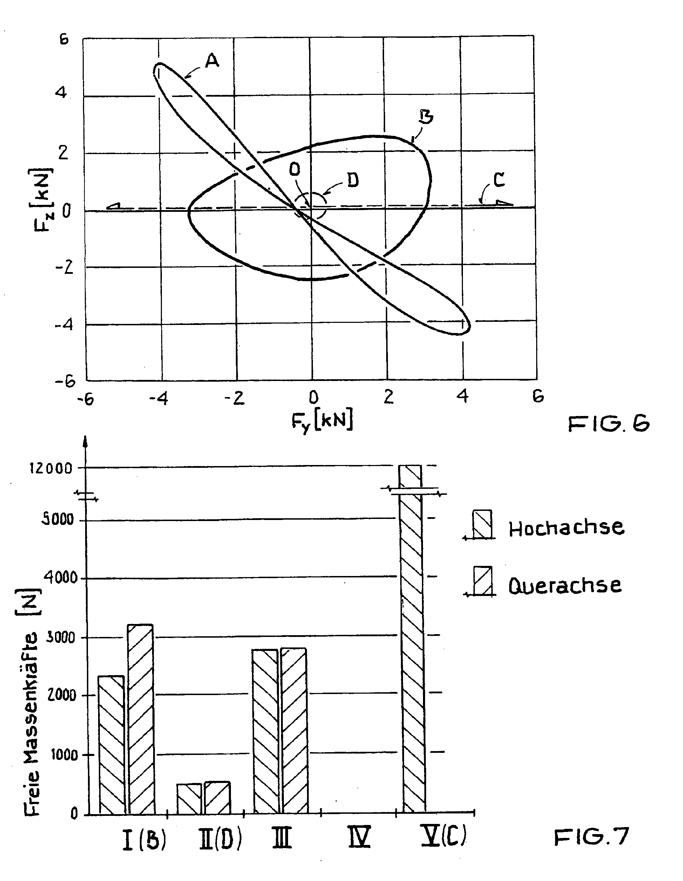

Wie am besten in Fig. 6 dargestellt, treten ohne eine solche Ausgleichswelle 31 bei der Brennkraftmaschine 1 Massenkräfte zweiter Ordnung auf, die sich in einer zur Drehachse 8 der Kurbelwelle 2 senkrechten Y,Z-Koordinatenebene (Fig. 5) aus einem in Richtung der Zylinderachsen, d.h. parallel zur Z- oder Hochachse der Brennkraftmaschine 1, ausgerichteten Kraftvektor und einem in einer dazu senkrechten Richtung, d.h. parallel zur Y- oder Querachse der Brennkraftmaschine 1, ausgerichteten Kraftvektor zusammensetzen. Diese in Fig. 6 mit $F_Z$ und $F_Y$ bezeichneten Kraftvektoren weisen jeweils eine Amplitude auf, die sich im Verlauf einer Umdrehung der Kurbelwelle 2 zyklisch verändert, so dass die Spitze einer Resultierenden R der beiden Kraftvektoren $F_Z$ und $F_Y$ während jeder Umdrehung der Kurbelwelle eine geschlossene Kurve um den Ursprung O des in Fig. 6 dargestellten Koordinatensystems beschreibt. Die in Fig. 6 dargestellten Kurven A und B zeigen für zwei mögliche Beispiele einer Auslegung bzw. Kinematik der Brennkraftmaschine 1 die zugehörigen Kurvenverläufe. Dabei kann sich bei einem nicht optimierten Mehrgelenkskurbeltrieb 11 beispielhaft der Kurvenverlauf der Kurve A mit einer langgestreckten schleifenartigen Gestalt einstellen, bei dem die freien Massenkräfte eine große Laufunruhe verursachen und zu deren Ausgleich zwei Ausgleichswellen erforderlich wären.

Demgegenüber treten bei konventionellen Brennkraftmaschinen freie Massenkräfte zweiter Ordnung nur in Richtung der Hochachse auf, wie durch die Linie C in Fig. 6 dargestellt. Wie durch den schwarzen Balken V an der rechten Seite des Balkendiagramms in Fig. 7 beispielhaft dargestellt, sind diese Massenkräfte bei konventionellen Brennkraftmaschinen bei gleichem Hub und gleicher oszillierender Ersatzmasse jedoch erheblich höher als die freien Massenkräfte bei der Brennkraftmaschine 1 mit dem Mehrgelenkskurbeltrieb 11, für den das in Fig. 7 am weitesten links dargestellte Balkenpaar I die maximalen Amplituden der Kraftvektoren $F_Z$ und $F_Y$ in Richtung der Hochachse (schwarz) und der Querachse (schraffiert) ohne jegliche Tilgung zeigt.

Um eine Tilgung der freien Massenkräfte zweiter Ordnung mittels einer einzigen Ausgleichswelle 31 zu ermöglichen und dadurch die Reibungsverluste der Brennkraftmaschine 1 ebenso wie den zusätzlichen Bauraum, das zusätzliche Gewicht und die zusätzlichen Kosten der Brennkraftmaschine 1 zu reduzieren, die für den Kräfteausgleich benötigt werden, weist der Mehrkurbeltrieb 11 der Brennkraftmaschine 1 eine spezielle Auslegung bzw. Kinematik auf, die im Folgenden unter Bezugnahme auf Fig. 5 beschrieben wird.

Wie in Fig. 5 dargestellt, ist für die nachfolgende Betrachtung der Auslegung bzw. Kinematik die Schwenkachse des Schwenkgelenks 19 zwischen einem Kolben 3 und einem zugehörigen Kolbenpleuel 4 mit P1 bezeichnet, während die Schwenkachse des Schwenkgelenks 18 zwischen dem Kolbenpleuel 4 und dem zugehörigen Koppelglied 9 mit P2 bezeichnet ist. Weiter ist die Längsmittelachse des mit dem Koppelglied 9 bestückten Hubzapfens 7 der Kurbelwelle 2 mit P3 bezeichnet, während die Schwenkachse des Schwenkgelenks 26 zwischen dem Koppelglied 9 und dem zugehörigen Anlenkpleuel 20 mit P4 bezeichnet ist. Die Längsmittelachse des mit dem Anlenkpleuel 20 bestückten Hubzapfens 24 der Exzenterwelle 9 ist mit P5 bezeichnet. Weiter zeigt Fig. 5 einen Winkel $\alpha$ zwischen den Geraden P3P2 und P3P4, sowie eine Schränkung S, die den horizontalen Abstand der Drehachse 8 der Kurbelwelle 2 von einer von den Zylinderachsen der Zylinder der Brennkraftmaschine aufgespannten Ebene EZ und bzw. den Abstand zwischen der Ebene EZ und einer vertikalen Ebene EKW durch die Drehachse 8 der Kurbelwelle 2 in einer zur Drehachse 8 der Kurbelwelle 2 senkrechten Koordinatenebene angibt, in der wie in Fig. 6 die Z-Achse der vertikalen Hochachse der Reihenbrennkraftmaschine 1 und die Y-Achse der horizontalen Querachse der Reihenbrennkraftmaschine 1 entspricht. Außerdem ist in Fig. 5 der horizontale Abstand der Drehachse 10 der Exzenterwelle 9 von der Zylinderachsenebene EZ mit y_EW und der vertikale Abstand der Drehachse 10 der Exzenterwelle 9 von der Drehachse 8 der Kurbelwelle mit z_EW bezeichnet.

Darüber hinaus wird in der nachfolgenden Betrachtung als Bezugsgröße der Kurbelradius r_KW der Kurbelwelle 2 verwendet, der als der Abstand der Längsmittelachse P3 der Hubzapfen 7 von der Drehachse 8 der Kurbelwelle 2 definiert ist, während der Kurbelradius r_EW der Exzenterwelle 9 den Abstand der Längsmittelachse P5 der Hubzapfen 24 der Exzenterwelle 9 von deren Drehachse 10 angibt. Weiter werden die Abstände zwischen P1 und P2 als $L_{P1P2}$, zwischen P2 und P3 als $L_{P2P3}$, zwischen P2 und P4 als $L_{P2P4}$, zwischen P3 und P4 als $L_{P3P4}$, zwischen P4 und P5 als $L_{P4P5}$, und der Kolbenhub als s_K bezeichnet.

Durch Berechnung und Versuche wurde festgestellt, dass sich die freien Massenkräfte zweiter Ordnung in einem mehr oder weniger großen Ausmaß tilgen lassen, wenn die Kinematik der Brennkraftmaschine 1 für einen Kolbenhub von s_K = 84,2 mm die folgenden Bedingungen erfüllt.

$$4{,}5 \times r\_KW < L_{P1P2} < 6 \times r\_KW \qquad (1)$$

$$1{,}5 \times r\_KW < L_{P2P3} < 3 \times r\_KW \qquad (2)$$

$$5{,}5 \times r\_KW < L_{P2P4} < 8 \times r\_KW \qquad (3)$$

$$3{,}5 \times r\_KW < L_{P3P4} < 5 \times r\_KW \qquad (4)$$

$$3{,}0 \times r\_KW < L_{P4P5} < 5 \times r\_KW \qquad (5)$$

Wenn diese Bedingungen erfüllt sind, beschreibt die Spitze der Resultierenden R der beiden Kraftvektoren $F_Y$ und $F_Z$ in Fig. 6 während jeder Umdrehung der Kurbelwelle die Kurve B, die eine eher ovale oder eiförmige Gestalt besitzt und damit bereits mehr als die Kurve A einer Kreisform nahe kommt. Eine Kreisform wäre die optimale Form, da in diesem Fall mit nur einer einzigen Ausgleichswelle 31 eine vollständige Tilgung der freien Massenkräfte zweiter Ordnung möglich wäre.

Um sich ausgehend von der Kurve B weiter an die Kreisform anzunähern und somit eine weitestgehende Tilgung der freien Massenkräfte zweiter Ordnung zu erzielen, sollte die Kinematik der Brennkraftmaschine 1 daher auch noch die folgenden Bedingungen erfüllen:

$$130° < \alpha < 160° \qquad\qquad (6)$$

$$0{,}75 \times r\_KW < S < 2 \times r\_KW \qquad\qquad (7)$$

$$0{,}05 \times r\_KW < r\_EW < 0{,}9 \times r\_KW \qquad\qquad (8)$$

$$-3 \times r\_KW < y\_EW < -8 \times r\_KW \qquad\qquad (9)$$

$$-1 \times r\_KW < z\_EW < -3 \times r\_KW \qquad\qquad (10)$$

Wenn diese Bedingungen erfüllt sind, und wenn sich die einzige Ausgleichswelle 31 mit derselben Drehrichtung wie die Kurbelwelle 2 dreht, beschreibt die Spitze der Resultierenden R der beiden Kraftvektoren $F_Y$ und $F_Z$ in Fig. 6 während jeder Umdrehung der Kurbelwelle eine kleine elliptische Kurve D, bei der die Amplitudenmaxima der Kraftvektoren $F_Z$ und $F_Y$ nahezu dieselbe Größe besitzen und jeweils etwa 500 N betragen, wie durch die Koordinaten in Fig. 6 und das Balkenpaar II des Balkendiagramms in Fig. 7 dargestellt. Im Vergleich mit der Kurve B können somit durch die oben genannten Bedingungen die freien Massenkräfte zweiter Ordnung noch einmal um 70 bis 80 % verringert werden, wie man durch Vergleich der Balkenpaare I und II in Fig. 7 sieht. Aufgrund der Abweichung der elliptischen Kurve D von der Kreisform verbleiben jedoch trotz der Tilgung mittels der Ausgleichswelle 31 noch relativ kleine Amplitudenmaxima der Kraftvektoren $F_Z$ und $F_Y$ der freien Massenkräfte zweiter Ordnung in Höhe von etwa 500 N, wie oben unter Bezugnahme auf Fig. 6 und 7 angegeben, jedoch sind diese in der Praxis unbedeutend, da ihre Amplituden in der Größenordnung derjenigen eines Ventiltriebs der Brennkraftmaschine liegen. Wie das Balkenpaar III in Fig. 7 zeigt, ist eine Reduzierung der freien Massenkräfte zweiter Ordnung nicht möglich, wenn sich unter den obigen Bedingungen die Ausgleichswelle 31 mit einer zur Drehrichtung der Kurbelwelle 2 entgegengesetzten Drehrichtung dreht. Zum Vergleich zeigt das Balkenpaar IV in Fig. 7, dass die verbleibenden freien Massenkräfte zweiter Ordnung bei einer Tilgung mit Hilfe zweier Ausgleichswellen zwar vollständig getilgt werden könnten, jedoch wären in diesem Fall die Reibungsverluste, der Bauraum, das Gewicht und die Kosten der Brennkraftmaschine nicht unerheblich höher.

**BEZUGSZEICHENLISTE**

| | |
|---|---|
| 1 | Brennkraftmaschine |
| 2 | Kurbelwelle |
| 3 | Kolben |
| 4 | Kolbenpleuel |
| 5 | Wellenlager Kurbelwelle |
| 6 | Wellenzapfen Kurbelwelle |
| 7 | Hubzapfen Kurbelwelle |
| 8 | Drehachse Kurbelwelle |

9  Exzenterwelle
10  Drehachse Exzenterwelle
11  Mehrgelenkskurbeltrieb
12  Koppelglied
13  Oberteil Koppelglied
14  Unterteil Koppelglied
15  Trennebene
16  Gleitlager
17  Hubarm Koppelglied
18  Schwenkgelenk
19  Schwenkgelenk
20  Anlenkpleuel
21  Pleuelstange
22  Pleuelauge
23  Pleuelauge
24  Hubzapfen Exzenterwelle
25  Bolzen
26  Schwenkgelenk
27  Koppelarm Koppelglied
28  Wellenabschnitt Exzenterwelle
29  Wellenlager Exzenterwelle
30  Ausgleichsgewichte Kurbelwelle
31  Ausgleichswelle

**Patentansprüche**

1.  Brennkraftmaschine (1) mit einem Mehrgelenkskurbeltrieb, wobei der Mehrgelenkskurbeltrieb (11) eine Mehrzahl von drehbar auf Hubzapfen (7) einer Kurbelwelle (2) gelagerten Koppelgliedern (12) und eine Mehrzahl von drehbar auf Hubzapfen (24) einer Exzenterwelle (9) gelagerten Anlenkpleueln (20) umfasst, wobei jedes der Koppelglieder (12) schwenkbar mit einem Kolbenpleuel (4) eines Kolbens (3) der Brennkraftmaschine (1) und einem der Anlenkpleuer (20) verbunden ist, **gekennzeichnet durch** eine einzige, zur Tilgung von Massenkräften zweiter Ordnung dienende Ausgleichswelle (31).

2.  Brennkraftmaschine nach Anspruch 1, **dadurch gekennzeichnet, dass** die Massenkräfte ($F_Z$, $F_Y$, R) zweiter Ordnung während einer Umdrehung der Kurbelwelle (2) eine maximale Amplitude aufweisen, die in der Größenordnung der Amplituden eines Ventiltriebs der Brennkraftmaschine (1) liegt.

3.  Brennkraftmaschine nach einem der vorangehenden Ansprüche, **gekennzeichnet durch** die folgende Beziehung:

$$4,5 \times r\_KW < L_{P1P2} < 6 \times r\_KW$$

wobei der Kurbelradius r_KW der Abstand einer Längsmittelachse (P3) eines Hubzapfens (7) der Kurbelwelle (2) von der Drehachse (8) der Kurbelwelle (2) ist, und wobei $L_{P1P2}$ der Abstand der Schwenkachse (P2) eines Schwenkgelenks (18) zwischen einem der Koppelglieder (12) und dem zugehörigen Kolbenpleuel (4) von einer Schwenkachse (P1) eines Schwenkgelenks (19) zwischen dem Kolbenpleuel (4) und dem zugehörigen Kolben (3) ist.

4.  Brennkraftmaschine nach einem der vorangehenden Ansprüche, **gekennzeichnet durch** die folgende Beziehung:

$$1,5 \times r\_KW < L_{P2P3} < 3 \times r\_KW$$

wobei der Kurbelradius r_KW der Abstand einer Längsmittelachse (P3) eines Hubzapfens (7) der Kurbelwelle (2) von der Drehachse (8) der Kurbelwelle (2) ist, und wobei $L_{P2P3}$ der Abstand der Schwenkachse (P2) eines Schwenkgelenks (18) zwischen einem der Kolbenpleuel (4) und dem zugehörigen Koppelglied (12) von der Längsmittelachse (P3) des mit dem Koppelglied (12) bestückten Hubzapfens (7) der Kurbelwelle (2) ist.

5. Brennkraftmaschine nach einem der vorangehenden Ansprüche, **gekennzeichnet durch** die folgende Beziehung:

$$5,5 \times r\_KW < L_{P2P4} < 8 \times r\_KW$$

wobei der Kurbelradius r_KW der Abstand einer Längsmittelachse (P3) eines Hubzapfens (7) der Kurbelwelle (2) von der Drehachse (8) der Kurbelwelle (2) ist, und wobei $L_{P2P4}$ der Abstand einer Schwenkachse (P2) eines Schwenkgelenks (18) zwischen einem der Kolbenpleuel (4) und dem zugehörigen Koppelglied (12) von der Schwenkachse (P4) eines Schwenkgelenks (26) zwischen dem Koppelglied (12) und dem zugehörigen Anlenkpleuel (20) ist.

6. Brennkraftmaschine nach einem der vorangehenden Ansprüche, **gekennzeichnet durch** die folgende Beziehung:

$$3,5 \times r\_KW < L_{P3P4} < 5 \times r\_KW$$

wobei der Kurbelradius r_KW der Abstand einer Längsmittelachse (P3) eines Hubzapfens (7) der Kurbelwelle (2) von der Drehachse (8) der Kurbelwelle (2) ist, und wobei $L_{P3P4}$ der Abstand der Schwenkachse (P4) eines Schwenkgelenks (26) zwischen einem der Anlenkpleuel (20) und dem zugehörigen Koppelglied (12) von der Längsmittelachse (P3) des mit dem Koppelglied (12) bestückten Hubzapfens (7) der Kurbelwelle (2) ist.

7. Brennkraftmaschine nach einem der vorangehenden Ansprüche, **gekennzeichnet durch** die folgende Beziehung:

$$3 \times r\_KW < L_{P4P5} < 5 \times r\_KW$$

wobei der Kurbelradius r_KW der Abstand einer Längsmittelachse (P3) eines Hubzapfens (7) der Kurbelwelle (2) von der Drehachse (8) der Kurbelwelle (2) ist, und wobei $L_{P4P5}$ der Abstand der Längsmittelachse (P5) eines Hubzapfens (24) der Exzenterwelle (9) von der Schwenkachse (P4) eines Schwenkgelenks (26) zwischen dem auf dem Hubzapfen (24) gelagerten Anlenkpleuel (20) und dem zugehörigen Koppelglied (12) ist.

8. Brennkraftmaschine nach einem der vorangehenden Ansprüche, **gekennzeichnet durch** die folgende Beziehung:

$$130° < \alpha < 160°$$

wobei $\alpha$ der Winkel ist, der von zwei Geraden (P3P2, P3P4) eingeschlossen wird, von denen die eine (P3P2) die Längsmittelachse (P3) eines Lagersitzes eines Hubzapfens (7) in einem Koppelglied (12) mit einer Schwenkachse (P3) eines Schwenkgelenks (18) zwischen dem Koppelglied (12) und dem zugehörigen Kolbenpleuel (4) verbindet, und von denen die andere (P3P4) die Längsmittelachse (P3) des Lagersitzes des Hubzapfens (7) im Koppelglied (12) mit einer Schwenkachse (P4) eines Schwenkgelenks (26) zwischen dem auf dem Hubzapfen (7) gelagerten Koppelglied (12) und dem zugehörigen Anlenkpleuel (20) verbindet.

9. Brennkraftmaschine nach einem der vorangehenden Ansprüche, **gekennzeichnet durch** die folgende Beziehung:

$$0,75 \times r\_KW < S < 2 \times r\_KW$$

wobei der Kurbelradius r_KW der Abstand einer Längsmittelachse (P3) eines Hubzapfens (7) der Kurbelwelle (2) von der Drehachse (8) der Kurbelwelle (2) ist, und wobei die Schränkung S ein horizontaler Abstand der Drehachse (8) der Kurbelwelle (2) von einer von Zylinderachsen von Zylindern der Brennkraftmaschine (1) aufgespannten Ebene (EZ) ist.

10. Brennkraftmaschine nach einem der vorangehenden Ansprüche, **gekennzeichnet durch** die folgende Beziehung:

$$0,05 \times r\_KW < r\_EW < 0,9 \times r\_KW$$

wobei der Kurbelradius r_KW der Abstand einer Längsmittelachse (P3) eines Hubzapfens (7) der Kurbelwelle (2) von der Drehachse (8) der Kurbelwelle (2) ist, und wobei r_EW der Abstand einer Längsmittelachse (P5) eines Hubzapfens (24) der Exzenterwelle (9) von der Drehachse (10) der Exzenterwelle (9) ist.

11. Brennkraftmaschine nach einem der vorangehenden Ansprüche, **gekennzeichnet durch** die folgende Beziehung:

$$-3 \times r\_KW < y\_EW < -8 \times r\_KW$$

wobei der Kurbelradius r_KW der Abstand einer Längsmittelachse (P3) eines Hubzapfens (7) der Kurbelwelle (2) von der Drehachse (8) der Kurbelwelle (2) ist, und wobei y_EW ein horizontaler Abstand der Drehachse (10) der Exzenterwelle (9) von einer von Zylinderachsen von Zylindern der Brennkraftmaschine (1) aufgespannten Ebene (EZ) in Richtung einer Querachse (Y) der Brennkraftmaschine (1) ist.

12. Brennkraftmaschine nach einem der vorangehenden Ansprüche, **gekennzeichnet durch** die folgende Beziehung:

$$-1 \times r\_KW < z\_EW < -3 \times r\_KW$$

wobei der Kurbelradius r_KW der Abstand einer Längsmittelachse (P3) eines Hubzapfens (7) der Kurbelwelle (2) von der Drehachse (8) der Kurbelwelle (2) ist, und wobei z_EW ein vertikaler Abstand der Drehachse (10) der Exzenterwelle (9) von der Drehachse (8) der Kurbelwelle (2) in Richtung einer Hochachse (Z) der Brennkraftmaschine (1) ist.

13. Brennkraftmaschine nach einem der vorangehenden Ansprüche, **dadurch gekennzeichnet, dass** sich die Ausgleichswelle (31) mit derselben Drehrichtung wie die Kurbelwelle (2) dreht.

14. Brennkraftmaschine nach einem der vorangehenden Ansprüche, **dadurch gekennzeichnet, dass** sich die Ausgleichswelle (31) mit der doppelten Drehzahl der Kurbelwelle (2) dreht.

15. Brennkraftmaschine nach einem der vorangehenden Ansprüche, **dadurch gekennzeichnet, dass** die Ausgleichswelle (31) oberhalb der Kurbelwelle (2) drehbar im Zylinderkurbelgehäuse gelagert ist.

16. Brennkraftmaschine nach einem der vorangehenden Ansprüche, **dadurch gekennzeichnet, dass** die Exzenterwelle (9) mit der halben Drehzahl der Kurbelwelle (2) und mit einer zur Drehrichtung der Kurbelwelle (2) entgegengesetzten Drehrichtung angetrieben wird.

**Claims**

1. Internal combustion engine (1) having a multi-joint crankshaft drive, said multi-joint crankshaft drive (11) comprising a plurality of coupling members (12) rotatably mounted on crank pins (7) of a crankshaft (2), and a plurality of articulated connecting rods (20) rotatably mounted on crank pins (24) of an eccentric shaft (9), each of the coupling members (12) being pivotally connected to a piston connecting rod (4) of a piston (3) of the internal combustion engine (1) and to one of the articulated connecting rods (20), **characterised by** a single balancer shaft (31) for neutralising second-order inertia forces.

2. Internal combustion engine according to claim 1, **characterised in that** the second-order inertia forces ($F_Z$, $F_Y$, R) have a maximal amplitude during a rotation of the crankshaft (2), said maximal amplitude being in the order of magnitude of the amplitudes of a valve drive of the internal combustion engine (1).

3. Internal combustion engine according to any of the preceding claims, **characterised by** the following relationship:

$$4.5 \times r\_KW < L_{P1P2} < 6 \times r\_KW$$

the crank radius r_KW being the distance of a longitudinal centre axis (P3) of a crank pin (7) of the crankshaft (2) from the rotational axis (8) of the crankshaft (2), and $L_{P1P2}$ being the distance of the pivot axis (P2) of a pivot joint (18) between one of the coupling members (12) and the associated piston connecting rod (4) from a pivot axis (P1) of a pivot joint (19) between the piston connecting rod (4) and the associated piston (3).

4. Internal combustion engine according to any of the preceding claims, **characterised by** the following relationship:

$$1.5 \times r\_KW < L_{P2P3} < 3 \times r\_KW$$

the crank radius r_KW being the distance of a longitudinal centre axis (P3) of a crank pin (7) of the crankshaft (2) from the rotational axis (8) of the crankshaft (2), and $L_{P2P3}$ being the distance of the pivot axis. (P2) of a pivot joint (18) between one of the piston connecting rods (4) and the associated coupling member (12) from the longitudinal centre axis (P3) of the crank pin (7), fitted with the coupling member (12), of the crankshaft (2).

5. Internal combustion engine according to any of the preceding claims, **characterised by** the following relationship:

$$5.5 \times r\_KW < L_{P2P4} < 8 \times r\_KW$$

the crank radius r_KW being the distance of a longitudinal centre axis (P3) of a crank pin (7) of the crankshaft (2) from the rotational axis (8) of the crankshaft (2), and $L_{P2P4}$ being the distance of a pivot axis (P2) of a pivot joint (18) between one of the piston connecting rods (4) and the associated coupling member (12) from the pivot axis (P4) of a pivot joint (26) between the coupling member (12) and the associated articulated connecting rod (20).

6. Internal combustion engine according to any of the preceding claims, **characterised by** the following relationship:

$$3.5 \times r\_KW < L_{P3P4} < 5 \times r\_KW$$

the crank radius r_KW being the distance of a longitudinal centre axis (P3) of a crank pin (7) of the crankshaft (2) from the rotational axis (8) of the crankshaft (2), and $L_{P3P4}$ being the distance of the pivot axis (P4) of the pivot joint (26) between one of the articulated connecting rods (20) and the associated coupling member (12) from the longitudinal centre axis (P3) of the crank pin (7), fitted with the coupling member (12), of the crankshaft (2).

7.  Internal combustion engine according to any of the preceding claims, **characterised by** the following relationship:

$$3 \times r\_KW < L_{P4P5} < 5 \times r\_KW$$

the crank radius r_KW being the distance of a longitudinal centre axis (P3) of a crank pin (7) of the crankshaft (2) from the rotational axis (8) of the crankshaft (2), and $L_{P4P5}$ being the distance of the longitudinal centre axis (P5) of a crank pin (24) of the eccentric shaft (9) from the pivot axis (P4) of a pivot joint (26) between the articulated connecting rod (20) mounted on the crank pin (24) and the associated coupling member (12).

8.  Internal combustion engine according to any of the preceding claims, **characterised by** the following relationship:

$$130° < α < 160°$$

α being the angle which is enclosed by two straight lines (P3P2, P3P4), of which one (P3P2) connects the longitudinal centre axis (P3) of a bearing seat of a crank pin (7) in a coupling member (12) to a pivot axis (P3) of a pivot joint (18) between the coupling member (12) and the associated piston connecting rod (4), and of which the other (P3P4) connects the longitudinal centre axis (P3) of the bearing seat of the crank pin (7) in the coupling member (12) to a pivot axis (P4) of a pivot joint (26) between the coupling member (12), mounted on the crank pin (7), and the associated articulated connecting rod (20).

9.  Internal combustion engine according to any of the preceding claims, **characterised by** the following relationship:

$$0.75 \times r\_KW < S < 2 \times r\_KW$$

the crank radius r_KW being the distance of a longitudinal centre axis (P3) of a crank pin (7) of the crankshaft (2) from the rotational axis (8) of the crankshaft (2) and the offset S being a horizontal distance of the rotational axis (8) of the crankshaft (2) from a plane (EZ) spanned by cylinder axes of cylinders of the internal combustion engine (1).

10. Internal combustion engine according to any of the preceding claims, **characterised by** the following relationship:

$$0.05 \times r\_KW < r\_EW < 0.9 \times r\_KW$$

the crank radius r_KW being the distance of a longitudinal centre axis (P3) of a crank pin (7) of the crankshaft (2) from the rotational axis (8) of the crankshaft (2), and r_EW being the distance of a longitudinal centre axis (P5) of a crank pin (24) of the eccentric shaft (9) from the rotational axis (10) of the eccentric shaft (9).

11. Internal combustion engine according to any of the preceding claims, **characterised by** the following relationship:

$$-3 \times r\_KW < y\_EW < -8 \times r\_KW$$

the crank radius r_KW being the distance of a longitudinal centre axis (P3) of a crank pin (7) of the crankshaft (2) from the rotational axis (8) of the crankshaft (2), and y_EW being a horizontal distance of the rotational axis (10) of the eccentric shaft (9) from a plane (EZ), which is spanned by cylinder axes of cylinders of the internal combustion engine (1), in the direction of a transverse axis (Y) of the internal combustion engine (1).

**12.** Internal combustion engine according to any of the preceding claims, **characterised by** the following relationship:

$$-1 \times r\_KW < z\_EW < -3 \times r\_KW$$

the crank radius r_KW being the distance of a longitudinal centre axis (P3) of a crank pin (7) of the crankshaft (2) from the rotational axis (8) of the crankshaft (2), and z_EW being a vertical distance of the rotational axis (10) of the eccentric shaft (9) from the rotational axis (8) of the crankshaft (2) in the direction of a vertical axis (Z) of the internal combustion engine (1).

**13.** Internal combustion engine according to any of the preceding claims, **characterised in that** the balancer shaft (31) rotates in a same rotational direction as the crankshaft (2).

**14.** Internal combustion engine according to any of the preceding claims, **characterised in that** the balancer shaft (31) rotates at twice the rotational speed of the crankshaft (2).

**15.** Internal combustion engine according to any of the preceding claims, **characterised in that** the balancer shaft (31) is rotatably mounted above the crankshaft (2) in the cylinder crank housing.

**16.** Internal combustion engine according to any of the preceding claims, **characterised in that** the eccentric shaft (9) is driven at half the rotational speed of the crankshaft (2) and in a rotational direction which is counter to the rotational direction of the crankshaft (2).

**Revendications**

**1.** Moteur à combustion interne (1) avec un système bielle-manivelle à articulation multiple, le système bielle-manivelle à articulation multiple (11) comprenant plusieurs éléments de couplage (12) montés rotatifs sur des manetons (7) d'un vilebrequin (2) et plusieurs bielles articulées (20) montées rotatives sur des manetons (24) d'un arbre d'excentrique (9), chacun des éléments de couplage (12) étant assemblés de manière à pivoter avec une bielle de piston (4) d'un piston (3) du moteur à combustion interne (1) et avec l'une des bielles articulées (20), **caractérisé par** un seul arbre d'équilibrage (31) servant à éliminer des forces d'inertie de deuxième ordre.

**2.** Moteur à combustion interne selon la revendication 1, **caractérisé en ce que** les forces d'inertie ($F_Z$, $F_Y$, R) de deuxième ordre ont pendant une rotation du vilebrequin (2) une amplitude maximale qui est de l'ordre de grandeur des amplitudes d'une commande de soupapes du moteur à combustion interne (1).

**3.** Moteur à combustion interne selon l'une des revendications précédentes, **caractérisé par** la relation suivante :

$$4,5 \times r\_KW < L_{P1P2} < 6 \times r\_KW$$

le rayon de vilebrequin r_KW étant la distance d'un axe médian longitudinal (P3) d'un maneton (7) du vilebrequin (2) à l'axe de rotation (8) du vilebrequin (2) et $L_{P1P2}$ étant la distance de l'axe de pivotement (P2) d'une articulation pivotante (18) entre les éléments de couplage (12) et la bielle de piston associée (4) à un axe de pivotement (P1) d'une articulation pivotante (19) entre la bielle de piston (4) et le piston associé (3).

**4.** Moteur à combustion interne selon l'une des revendications précédentes, **caractérisé par** la relation suivante :

$$1,5 \times r\_KW < L_{P2P3} < 3 \times r\_KW$$

le rayon de vilebrequin r_KW étant la distance d'un axe médian longitudinal (P3) d'un maneton (7) du vilebrequin (2) à l'axe de rotation (8) du vilebrequin (2) et $L_{P2P3}$ étant la distance de l'axe de pivotement (P2) d'une articulation pivotante (18) entre l'une des bielles de piston (4) et l'élément de couplage associé (12) à l'axe médian longitudinal (P3) du maneton (7), équipé de l'élément de couplage (12), du vilebrequin (2).

5. Moteur à combustion interne selon l'une des revendications précédentes, **caractérisé par** la relation suivante :

$$5,5 \times r\_KW < L_{P2P4} < 8 \times r\_KW$$

le rayon de vilebrequin r_KW étant la distance d'un axe médian longitudinal (P3) d'un maneton (7) du vilebrequin (2) à l'axe de rotation (8) du vilebrequin (2) et $L_{P2P4}$ étant la distance d'un axe de pivotement (P2) d'une articulation pivotante (18) entre l'une des bielles de piston (4) et l'élément de couplage associé (12) à l'axe de pivotement (P4) d'une articulation pivotante (26) entre l'élément de couplage (12) et la bielle articulée associée (20).

6. Moteur à combustion interne selon l'une des revendications précédentes, **caractérisé par** la relation suivante :

$$3,5 \times r\_KW < L_{P3P4} < 5 \times r\_KW$$

le rayon de vilebrequin r_KW étant la distance d'un axe médian longitudinal (P3) d'un maneton (7) du vilebrequin (2) à l'axe de rotation (8) du vilebrequin (2) et $L_{P3P4}$ étant la distance de l'axe de pivotement (P4) d'une articulation pivotante (26) entre l'une des bielles articulées (20) et l'élément de couplage associé (12) à l'axe médian longitudinal (P3) du maneton (7), équipé de l'élément de couplage (12), du vilebrequin (2).

7. Moteur à combustion interne selon l'une des revendications précédentes, **caractérisé par** la relation suivante :

$$3 \times r\_KW < L_{P4P5} < 5 \times r\_KW$$

le rayon de vilebrequin r_KW étant la distance d'un axe médian longitudinal (P3) d'un maneton (7) du vilebrequin (2) à l'axe de rotation (8) du vilebrequin (2) et $L_{P4P5}$ étant la distance de l'axe médian longitudinal (P5) d'un maneton (24) de l'arbre d'excentrique (9) à l'axe de pivotement (P4) d'une articulation pivotante (26) entre la bielle articulée (20) montée sur le maneton (24) et l'élément de couplage associé (12).

8. Moteur à combustion interne selon l'une des revendications précédentes, **caractérisé par** la relation suivante :

$$130° < \alpha < 160°$$

A étant l'angle formé par les deux droites (P3P2, P3P4) dont l'une (P3P2) relie l'axe médian longitudinal (P3) d'un palier d'un maneton (7) dans un élément de couplage (12) à un axe de pivotement (P3) d'une articulation pivotante (18) entre un élément de couplage (12) et la bielle de piston associée (4) et dont l'autre (P3P4) relie l'axe médian longitudinal (P3) du palier du maneton (7) dans l'élément de couplage (12) à un axe de pivotement (P4) d'une articulation pivotante (26) entre l'élément de couplage (12), monté sur le maneton (7), et la bielle articulée associée (20).

9. Moteur à combustion interne selon l'une des revendications précédentes, **caractérisé par** la relation suivante :

$$0,75 \times r\_KW < S < 2 \times r\_KW$$

le rayon de vilebrequin r_KW étant la distance d'un axe médian longitudinal (P3) d'un maneton (7) du vilebrequin (2) à l'axe de rotation (8) du vilebrequin (2) et le décalage (S) étant une distance horizontale de l'axe de rotation (8) du vilebrequin (2) à un plan (EZ) formé par des axes de cylindres du moteur à combustion interne (1).

**10.** Moteur à combustion interne selon l'une des revendications précédentes, **caractérisé par** la relation suivante :

$$0,05 \ \mathrm{x} \ r\_KW < r\_EW < 0,9 \ \mathrm{x} \ r\_KW$$

le rayon de vilebrequin r_KW étant la distance d'un axe médian longitudinal (P3) d'un maneton (7) du vilebrequin (2) à l'axe de rotation (8) du vilebrequin (2) et r_EW étant la distance d'un axe médian longitudinal (P5) d'un maneton (24) de l'arbre d'excentrique (9) à l'axe de rotation (10) de l'arbre d'excentrique (9).

**11.** Moteur à combustion interne selon l'une des revendications précédentes, **caractérisé par** la relation suivante :

$$-3 \ \mathrm{x} \ r\_KW < y\_EW < -8 \ \mathrm{x} \ r\_KW$$

le rayon de vilebrequin r_KW étant la distance d'un axe médian longitudinal (P3) d'un maneton (7) du vilebrequin (2) à l'axe de rotation (8) du vilebrequin (2) et y_EW étant une distance horizontale de l'axe de rotation (10) de l'arbre d'excentrique (9) à un plan (EZ) formé par des axes de cylindres du moteur à combustion interne (1) en direction d'un axe transversal (Y) du moteur à combustion interne (1).

**12.** Moteur à combustion interne selon l'une des revendications précédentes, **caractérisé par** la relation suivante :

$$-1 \ \mathrm{x} \ r\_KW < z\_EW < -3 \ \mathrm{x} \ r\_KW$$

le rayon de vilebrequin r_KW étant la distance d'un axe médian longitudinal (P3) d'un maneton (7) du vilebrequin (2) à l'axe de rotation (8) du vilebrequin (2) et z_EW étant une distance verticale de l'axe de rotation (10) de l'arbre d'excentrique (9) à l'axe de rotation (8) du vilebrequin (2) en direction d'un axe normal (Z) du moteur à combustion interne (1).

**13.** Moteur à combustion interne selon l'une des revendications précédentes, **caractérisé en ce que** l'arbre d'équilibrage (31) tourne dans le même sens de rotation que le vilebrequin (2).

**14.** Moteur à combustion interne selon l'une des revendications précédentes, **caractérisé en ce que** l'arbre d'équilibrage (31) tourne avec une vitesse de rotation double de celle du vilebrequin (2).

**15.** Moteur à combustion interne selon l'une des revendications précédentes, **caractérisé en ce que** l'arbre d'équilibrage (31) est monté au-dessus du vilebrequin (2) de manière à pouvoir tourner dans le bloc-cylindres.

**16.** Moteur à combustion interne selon l'une des revendications précédentes, **caractérisé en ce que** l'arbre d'excentrique (9) est entraîné avec la moitié de la vitesse de rotation du vilebrequin (2) et avec un sens de rotation opposé au sens de rotation du vilebrequin (2).

FIG.1

FIG.2

FIG.3

FIG.4

FIG.5

FIG. 6

FIG.7

**IN DER BESCHREIBUNG AUFGEFÜHRTE DOKUMENTE**

**In der Beschreibung aufgeführte Patentdokumente**

- DE 102005054761 A
- DE 102005054760 A
- EP 1126144 A
- JP 2004124775 A
- WO 2007057149 A
- EP 1659276 A